Europäisches Patentamt

European Patent Office

Office européen des brevets

(11) Numéro de publication: **0 027 417**
**B1**

(12) **FASCICULE DE BREVET EUROPEEN**

(45) Date de publication du fascicule du brevet: **12.09.84**

(21) Numéro de dépôt: **80401448.8**

(22) Date de dépôt: **09.10.80**

(51) Int. Cl.³: **B 60 C 7/12,** B 29 H 13/00

(54) **Procédé et dispositif de fabrication de chambres du type increvable pour roues de véhicules.**

(30) Priorité: **11.10.79 FR 7925303**

(43) Date de publication de la demande:
**22.04.81 Bulletin 81/16**

(45) Mention de la délivrance du brevet:
**12.09.84 Bulletin 84/37**

(84) Etats contractants désignés:
**AT BE CH DE FR GB IT LI LU NL SE**

(56) Documents cités:
**FR-A- 525 449**
**FR-A- 538 459**
**FR-A- 543 442**
**FR-A-1 058 794**
**FR-A-2 350 216**
**FR-A-2 357 384**
**US-A-1 694 260**
**US-A-2 620 844**
**US-A-2 620 845**

(73) Titulaire: **HUTCHINSON-MAPA**
**2, rue Balzac**
**F-75008 Paris (FR)**

(72) Inventeur: **Estrade, Robert**
**Impasse des Genêts La Blanchisserie**
**Saint Germain du Corbeis F-61000 Alençon (FR)**
Inventeur: **Michaut, Jean**
**48, Rue de la Procession**
**F-78600-Maisons Laffitte (FR)**

(74) Mandataire: **Ores, Irène et al**
**CABINET ORES 6, Avenue de Messine**
**F-75008 Paris (FR)**

Courier Press, Leamington Spa, England.

## Description

La présente invention est relativ à un nouveau procédé de fabrication de chambres du type dit increvable pour roues assurant des fonctions de portage ou de guidage de masses mobiles et aux chambres increvables obtenues par ce procédé.

On connaît, conformément à l'Art antérieur, des pièces pneumatiques qui permettent d'éviter la détérioration rapide de l'enveloppe desdites pièces pneumatiques en cas de roulage à plat consécutif à une perforation, grâce à la disposition, dans ladite enveloppe, d'un coussin torique en matériau élastomère, qui comporte des alvéoles cylindriques indépendants les uns des autres, gonflés à une pression prédéterminée au moment de la fabrication, à l'aide d'un gaz approprié. L'on connaît également des pièces pneumatiques du type dit 'increvable" dans lesquelles les alvéoles cylindriques du coussin torique sont toujours gonflés à une pression prédéterminée, mais le coussin torique est agencé de telle manière dans l'enveloppe qu'il est logé à la base de l'enveloppe, sur les flancs de laquelle il s'applique pour assurer l'étanchéité de celle-ci, laissant libre la partie supérieure de l'enveloppe qui peut être gonflée à l'aide d'une valve qui traverse le coussin, à des pression ajustables en fonction des besoins d'utilisation. Alors que les pièces pneumatiques connues décrites en premier lieu sont à pression prédéterminée, on peut faire varier à volonté la pression des pièces pneumatiques décrites en second lieu.

Toutefois, du fait de leur structure alvéolaire, les chambres dites increvables constituées par un coussin torique pourvu d'alvéoles indépendants les uns des autres, proposées conformément à l'Art antérieur, présentent des difficultés de fabrication: un procédé classique de fabrication de ces chambres consiste à réaliser des moitiés de tronçons de chambres, de forme sensiblement semi-torique, par boudinage par exemple, puis à réunir deux demi-tronçons symétriques ainsi obtenus, entre eux, par leurs faces planes respectives, par assemblage à l'aide d'un solvant, après quoi les multiples tronçons ainsi obtenus, nécessaires à la réalisation du coussin torique — de 3 à 4 (3,5 en dessous, 3,5 en dessus) selon le diamètre du pneumatique — sont rapportés les uns aux autres, généralement également à l'aide d'un solvant. La fabrication d'un coussin torique à alvéoles, conformément à l'Art antérieur, nécessite donc une multiplicité d'opérations tant au niveau de la fabrication proprement dite qu'au niveau des opérations d'assemblage par collage, ce qui rend cette fabrication longue, grande consommatrice de main-d'oeuvre et onéreuse. De plus, la multiplicité des joints d'assemblage représente un risque de fuite du gaz sous pression contenu dans les alvéoles et, par voie de conséquence, un risque d'altération des caractéristiques propres à ce type de chambres à air dont la valeur réside précisément dans le fait que la présence d'un gaz sous pression constante dans les alvéoles devrait rendre ces chambres à air insensibles aux perforations.

On a tenté, conformément au Brevet français n° 1 058 794, de remédier à ces difficultés en proposant de réaliser des chambres dites increvables par juxtaposition de deux éléments annulaires en forme de demi-tores, par leurs faces planes symétriques, ces éléments annulaires devant comporter des trous borgnes constituant des alvéoles cylindriques obtenus par moulage en même temps que les éléments annulaires semi-toriques eux-mêmes.

Il s'est toutefois avéré dans la pratique que le processus de moulage préconisé conformément à l'Art antérieur ne permettait pas l'obtention d'alvéoles, ceux-ci se refermant dès qu'on était parvenu à extraire les projections du moule correspondantes, de la masse moulée non vulcanisée, extraction qui était par ailleurs quasi impossible à réaliser car le caoutchouc restait collé aux broches destinées à former les alvéoles.

Par suite, la seule technique actuellement existante pour réaliser dans les demi-tronçons des trous borgnes cylindriques qui donnent lieu à des alvéoles cylindriques lors de l'assemblage de deux demi-tronçons symétriques par leurs faces planes, consiste à percer des trous cylindriques dans la masse d'élastomère. Une telle technique requiert une intervention manuelle et est donc consommatrice de main-d'oeuvre; de plus, la réalisation manuelle des trous borgnes limite la géométrie de ceux-ci à la forme cylindrique; en outre, elle nuit à la régularité de la forme et de la répartition des alvéoles, et elle ne permet pas une répartition rigoureusement constante du produit, entraînant ainsi des variations du poids, des dimensions et des caractéristiques mécaniques des chambres obtenues.

Il a également été proposé par le Brevet américain HIBBERT n° 1 694 260, de réaliser un noyau de pneus à partir de deux moitiés de noyau en caoutchouc semi-vulcanisé. Toutefois, une telle sous-vulcanisation n'est pas de nature à stabiliser les alvéoles formés dans la masse du caoutchouc, en sorte que le but visé par ce Brevet n'est pas atteint attendu que le volume sous-vulcanisé obtenu est essentiellement déformable et n'assure aucune stabilité de forme et que les alvéoles une une tendance importante à se refermer, et se refermeraient effectivement si le Brevet HIBBERT ne prévoyait pas l'interposition de pièces de division réalisant la jonction entre les deux moitiés du noyau.

La présente invention s'est en conséquence donné pour but de pourvoir à des chambres du type di increvable qui répondent mieux aux nécessités de la pratique que les chambres de ce type précédemment connues, notamment en ce qu'elles présentent des alvéoles de toutes formes adaptées aux utilisations les plus diverses et les plus étendues de ces chambres, qu'elles soient destinées à assurer des fonctions de portage de masses mobiles ou des fonctions de guidage en tant qu'elles sont montées sur des engins militaires, des camions, des véhicules tractés ou des voitures automobiles, en ce que les chambres increvables conformes à l'invention comportent des alvéoles dont la forme, la répartition, l'épaisseur de parois et les dimensions sont rigoureusement contrôlées, en ce que ces chambres increvables présentent entre elles une grande constance de poids, de dimensions, de caractéristiques mécaniques, c'est-à-dire une reproductibilité optimale, et en ce que le comportement des pneumatiques équipés de ces chambres à air est considérablement amélioré en cas de roulage à plat consécutif à une perforation. En outre, les chambres increvables conformes à l'invention, dont les alvéoles contiennent du gaz sous une pression prédéterminée sensiblement constante, conviennent à l'usage aussi bien en association avec des pneumatiques à pression constante qu'avec des pneumatiques à pression variable. Les buts ci-dessus sont atteints grâce au nouveau procédé de fabrication auquel pourvoit la présente invention, qui permet de fabriquer des chambres à air increvables du type précité, à des cadences sensiblement plus rapides que dans l'Art antérieur, avec une main-d'oeuvre réduite et dans des conditions de rentabilité économique très nettement améliorées, et qui permet d'obtenir des chambres à air increvables dont le nombre de joints d'assemblage est considérablement réduit par rapport à l'Art antérieur et dont le poids, les dimensions, les caractéristiques mécaniques sont constants.

La présente invention a pour objet la fabrication de chambres moulées pour pneumatiques du type dit increvable, comprenant un coussin torique en matériau élastomère comportant des alvéoles indépendants entre eux dont chacun contient un gaz sous une pression prédéterminée, remarquables en ce qu'elles comportent une structure alvéolaire obtenue par moulage et en ce que la structure alvéolaire est constituée par des alvéoles régulièrement répartis, continus de part et d'autre du plan médian de la chambre, assurant une pression équilibrée dans le sens transversal de cette dernière, lesdits alvéoles présentant une forme géométrique et des dimensions stabilisées, adaptées aux besoins, telles qu'une forme cylindrique, prismatique, hexagonale, en nids d'abeilles, en particulier, lesquels alvéoles présentent une géométrie régulière, sont uniformément répartis et ont une épaisseur de parois contrôlée identique entre alvéoles pour une même rangée d'alvéoles, sur tout le pourtour de la chambre, permettant ainsi de maîtriser la constance des caractéristiques mécaniques desdites chambres et d'améliorer leur équilibrage et leur souplesse pneumatique.

Ces chambres à air sont fabriquées selon l'invention en mettant en oeuvre un nouveau procédé qui comprend une étape de remplissage d'un moule avec un élastomère approprié, pour préformer des éléments semi-toriques comportant des cavités borgnes ouvertes sur la face plane de chaque élément semi-torique, une première opération de vulcanisation, l'assemblage des deux demi-tores et une seconde opération de vulcanisation, lequel procédé est caractérisé en ce que la première opération de vulcanisation consiste à soumettre les éléments semi-toriques préformés à un traitement de vulcanisation, dans le moule de préformage, par application directe des températures de vulcanisation à la masse de l'élastomère, à l'exception de la zone superficielle plane de jonction des noyaux semi-toriques, laquelle zone est en contact avec une partie non-chauffée du moule, notamment avec la plaque de fermeture plane du moule, une telle opération de vulcanisation ayant pour effet de stabiliser le matériau élastomère dans sa masse et de conférer à la zone superficielle plane de l'élément semi-torique un état de sous-vulcanisation, cette première opération de vulcanisation étant suivie de démoulage des éléments semi-toriques du moule de préformage et d'une deuxième opération de moulage au cours de laquelle ils sont soumis à une deuxième opération de vulcanisation propre à assembler lesdites zones superficielles planes par vulcanisation complète de ces dernières et à conférer à la chambre ses caractéristiques mécaniques optimales.

Selon un mode de réalisation avantageux du procédé objet de la présente invention, les éléments semi-toriques préformés sont soumis à une première opération de vulcanisation à une température pouvant atteindre 170°C à 200°C, pendant cinq minutes à une heure, qui est appliquée à la masse de l'élastomère à l'exclusion des faces de jonction planes desdits éléments semi-toriques.

Selon un autre mode de réalisation avantageux du procédé qui fait l'objet de la présente invention, la chaleur de la première opération de vulcanisation est répartie de façon homogène appropriée dans la masse à mouler, par le moule de préformage qui comporte à cet effet un réseau de chauffage incorporé, à l'exclusion de la plaque de fermeture plane du moule qui ne comporte pas de moyens de chauffage.

Selon encore un autre mode de réalisation avantageux du procédé qui fait l'objet de la présente invention, le raccordement des faces planes respectives sous-vulcanisées de deux éléments semi-toriques correspondants est réalisé conjointement avec une deuxième opération de vulcanisation, dans une atmosphère d'un gaz inerte sous pression, par serrage et compression des faces de soudure par chauffage progressif pouvant atteindre 200°C en fin d'opération, pendant une durée de quelques minutes à une ou plusieurs heures.

Selon encore un autre mode de réalisation avantageux du procédé qui fait l'objet de la présente invention, le raccordement des faces planes respectives sous-vulcanisées de deux éléments semi-toriques correspondants est réalisé au cours d'une première étape au cours de laquelle les demi-tores préformés et ayant subi une première opération de vulcanisation, sont mis en place dans les deux coquilles en regard l'une de l'autre, d'un moule, en ce que ce dernier est ensuite fermé de façon étanche, puis mis en pression de gaz inerte, après quoi les deux demi-tores sont comprimés mécaniquement l'un sur l'autre par fermeture complète et verrouillage du moule en position fermée; la deuxième opération de vulcanisation est réalisée au cours d'une seconde étape au cours de laquelle ledit moule verrouillé, contenant l'élément torique raccordé, est chauffé pendant quelques minutes à une à plusieurs heures à une température pouvant atteindre 170 à 200°C, à l'aide de moyens appropriés tels que plateaux chauffants, étuve, introduction de vapeur dans le moule, application d'énergie haute fréquence ou ultra-haute fréquence, etc. pour réaliser simultanément la vulcanisation complète et l'assemblage des deux faces planes précitées l'une avec l'autre.

Selon une modalité avantageuse de l'invention, le gaz interte introduit dans le second moule est mis et maintenu sous une pression de 0,5 à 10 bars.

La présente invention a en outre pour objet un appareillage pour la fabrication de chambres moulées pour pneumatiques increvables du type mentionné plus haut, lequel appareillage comprend un moule comportant une partie femelle en demi-coquille dont le remplissage est réalisé d'une manière connue par des canaux de transfert et une partie mâle qui porte des doigts de moulage de cavités dans la masse du matériau élastomère qui remplit la demi-coquille femelle, lequel appareillage est caractérisé en ce qu'il comprend, en combinaison, un moule à circuit de chauffage incorporé pour le préformage et la première opération de vulcanisation d'un élément semi-torique, et un moule de raccordement de deux éléments semi-toriques en regard l'un de l'autre, extraits du moule de préformage et de vulcanisation susdit, et de vulcanisation finale d'un élément torique ainsi raccordé, et en ce que le moule de préformage et de vulcanisation comprend une partie femelle en demi-coquille dont le remplissage est réalisé d'une manière connue par des canaux de transfert, une plaque de fermeture de la face plane de la demi-coquille, une partie mâle qui porte des doigts de moulage de cavités dans la masse du matériau élastomère qui remplit la demi-coquille femelle, un réseau de chauffage incorporé d'une part dans la partie femelle du moule et d'autre part dans les doigts de moulage des cavités, à l'exclusion de la plaque de fermeture.

Conformément à l'invention, ledit réseau de chauffage est constitué par un circuit de fluide incorporé dans le moule et chauffé à une température pouvant atteindre 170°C à 200°C, associé à un dispositif de régulation de la température.

Selon une autre modalité de l'invention, le réseau de chauffage est constitué par un réseau de chauffage électrique par résistance incorporé dans le moule.

Conformément à l'invention, l'appareillage est caractérisé en ce que le moule de raccordement et de vulcanisation finale comprend:

— deux parties dans chacune desquelles est ménagée en regard, une empreinte destinée à recevoir un élément semi-torique;

— une admission de gaz sous pression, inerte à l'égard du matériau élastomère dont sont constitués les éléments semi-toriques;

— des moyens de fermeture étanche du moule, par serrage des deux parties du moule de raccordement et de vulcanisation finale, et des moyens de verrouillage du moule; et

— des moyens de chauffage du moule pour assurer le raccordement des deux surfaces planes en regard des deux éléments semi-toriques contenus dans les empreintes en regard susdites des deux parties dudit moule, et la deuxième opération de vulcanisation de l'élément torique obtenu.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:

— la figure 1 est une vue en coupe suivant I—I de la figure 2, d'un moule de préformage et de vulcanisation d'éléments semi-toriques, conforme à la présente invention;

— la figure 2 est une vue en plan d'un moule de préformage et de vulcanisation d'éléments semi-toriques, conforme à la presente invention;

— les figures 3 à 5 représentent, en coupe, le second moule de raccordement et de vulcanisation finale d'une chambre à air torique à alvéoles conforme à l'invention, et en particulier:

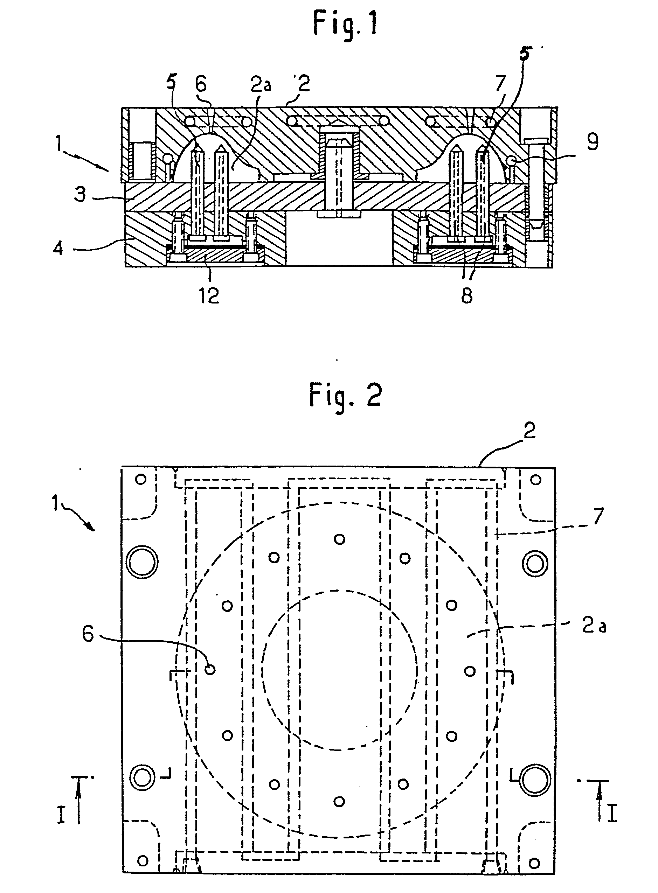

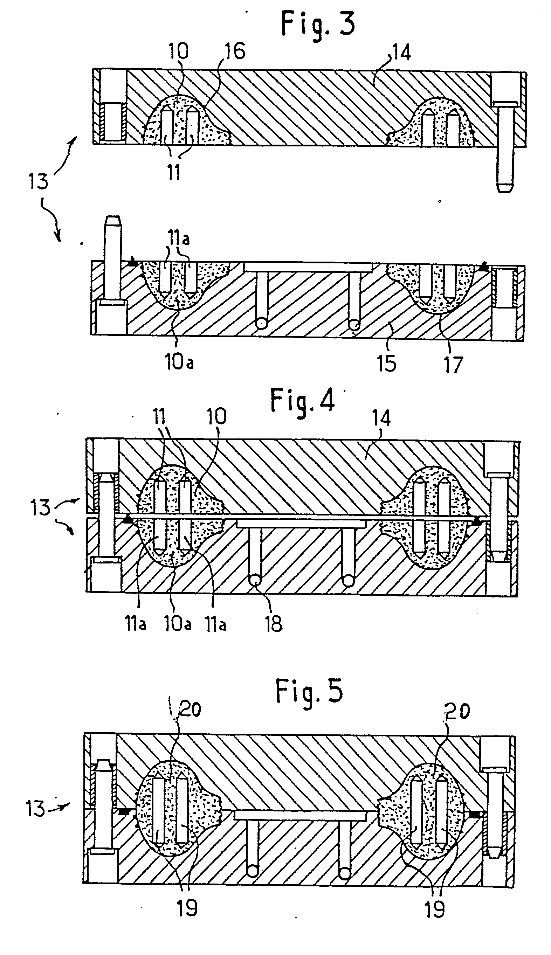

· la figure 3 représente un premier stade de fonctionnement du second moule, à savoir le stade de mise en place de deux éléments semi-toriques extraits du premier moule représenté aux figures 1 et 2, dans chacune des parties en regard dudit second moule;

· la figure 4 représente un deuxième stade de fonctionnement du second moule, à savoir le stade d'introduction et de mise sous pression d'un gaz inerte dans ledit second moule; et

· la figure 5 représente le stade de raccordement de deux éléments semi-toriques en regard dans les deux parties dudit second moule.

Il doit être bien entendu, toutefois, que ces dessins et les parties descriptives correspondantes, sont donnés uniquement à titre d'illustration de l'objet de l'invention, dont ils ne constituent en aucune manière une limitation.

Le procédé et l'outillage de moulage conformes à la présente invention permettent d'obtenir une chambre increvable en élastomère, comportant des alvéoles isolés les uns des autres, par moulage de deux éléments semitoriques qui sont ensuite raccordés uniquement au niveau de leurs surfaces planes, c'està-dire que l'on évite ainsi la réalisation de demitronçons assemblés en un tronçon par collage, puis le raccordement des multiples tronçons ainsi obtenus, bout à bout pour obtenir la chambre visée, et la présence résultante d'une multiplicité de joints de raccordement. Cette simplification de la technique de fabrication et l'amélioration des caractéristiques des chambres réalisées par cette technique sont essentiellement obtenues grâce à la combinaison d'un processus de moulage avec un processus de première vulcanisation à une température pouvant atteindre 170 et même 200°C, qui est appliquée pendant quelques minutes à une heure et qui est suffisante pour procurer la stabilisation dimensionnelle recherchée de la demi-coquille obtenue, dans sa masse, et assurer une bonne planéité de la face plane de ladite demi-coquille, mais insuffisante pour faire perdre à cette face ses bonnes caractéristiques de soudabilité.

Toutefois, la réalisation d'une telle vulcanisation requiert des conditions de chauffage particulières, les modes classiques de chauffage des moules par plateau ou en autoclave n'étant pas de nature à permettre le contrôle précis de la vulcanisation requis par le procédé conforme à l'invention. C'est la raison pour laquelle, conformément à l'invention, le moule de préformage et de première vulcanisation n'est pas chauffé de l'extérieur, mais comporte son propre réseau de chauffage incorporé qui intéresse la demi-coquille extérieure 2 du moule et les doigts 5 de moulage des cavités, mais exclut la plaque de fermeture 3 de la face plane.

Le réseau de chauffage 7—8 incorporé dans le moule 1 est avantageusement constitué par une circulation de fluide chauffant, de la vapeur d'eau ou de l'huile par exemple, porté à une température qui peut atteindre 170 à 200°C, qui réalise la première vulcanisation voulue de l'élastomère préformé dans le moule 1. On peut, cependant, obtenir des résultats équivalents en substituant à ce réseau de chauffage par circulation de fluide un chauffage électrique par résistance.

Le moule 1 de préformage et de première vulcanisation représenté à titre d'exemple non limitatif aux figures 1 et 2, comporte une partie femelle 2 qui comporte une demi-coquille 2a dont la face plane est fermée par une plaque 3 et une partie mâle 4 qui porte des doigts 5 de moulage des demi-cavités 11 d'un élément semi-torique 10.

Le matériau élastomère est injecté dans la demi-coquille 2a par les canaux de transfert 6, de préférence sous un vide qui est obtenu à l'aide du collecteur de vide 9.

En rendant la plaque inférieure 12 de la partie mâle 4 du moule 1 indépendante des doigts 5, on facilite le démoulage de la pièce préformée 10, par extraction mécanique des doigts 5, puis séparation de l'ensemble 3—4 et de la partie femelle 2, la pièce préformée 10 restant sur la plaque 3, puis séparation de la plaque 3 et de la partie mâle 4, la demi-coquille préformée 10 reposant simplement sur le plaque 3.

Après extraction de deux demi-coquilles 10, 10a, des moules 1 dans lesquels elles ont été préformées et ont subi une primèrre vulcanisation, elles sont introduites dans un deuxième outillage désigné d'une façon générale par la référence 13, constitué par deux parties 14 et 15 disposées en regard l'une de l'autre, dans lesquelles est ménagée une empreinte 16—17, destinée à recevoir une demi-coquille 10, 10a, respectivement, dont chacune comporte des cavités 11, 11a.

La fermeture de ce moule 13 se fait de préférence en deux temps:

— dans un premier temps, on procèdè à sa fermeture incomplète sur un joint permettant l'introduction en 18, d'un gaz inerte sous pression, tel que l'azote, par exemple, pour mettre les demi-coquilles 10, 10a, et les demi-cavités 11, 11a, sous pression;

— une fois cette mise sous pression realisée, on ferme complètement le moule, en serrant et comprimant les faces de soudure, tout en contrôlant le maintien de la pression d'azote.

Le traitement de deuxième vulcanisation est réalisé d'une manière connue en elle-même à des températures qui peuvent atteindre 170 à 200°C, en utilisant des appareillages connus, tels que plateaux chauffants, presse autoclave, étuve, chauffage direct par de la vapeur introduite dans des cavités du moule, application d'énergie haute fréquence ou ultra-haute fréquence ou en utilisant tous autres moyens équivalents propres à réaliser la deuxième vulcanisation recherchée, pour assurer la stabilisation dimensionnelle des deux demi-tores assemblés pour former une structure 20 comportant des alvéoles 19.

Le matériau élastomère utilisé pour la réalisation des chambres increvables conformes à la présente invention, doit présenter des caractéristiques mécaniques adaptées aux utilisations auxquelles sont destinés les ensembles pneumatiques équipés desdites chambres et notamment à la pression du gonflage des alvéoles et/ou de l'enveloppe. Il doit donc être choisi de préférence parmi les matériaux élastomères à structure compacte ou cellulaire.

Il résulte de ce qui précède que quels que soient les modes de mise en oeuvre, de réalisation et d'application adoptés, l'on obtient un procédé de fabrication de chambres increvables du type comportant des alvéoles isolés les uns des autres contenant un gaz sous une pression prédéterminée, qui nécessite sensiblement moins de manipulations que les procédés connus dans l'Art antérieur, et permet une réduction notable des frais de main-d'oeuvre, ce procédé permettant d'obtenir des chambres increvables qui présentent une gamme très étendue d'utilisations et assurent un comportement bien meilleur pneumatique auquel elles sont associées, du fait de leur plus grande fiabilité due, d'une part à l'élimination pratiquement totale des risques de fuite du gaz occlus dans les alvéoles et, d'autre part, à une meilleure répartition des masses, liée à l'homogénéité de la forme et des dimensions des alvéoles qui résulte de la technique mise en oeuvre, à savoir la combinaison du moulage et d'un processus de vulcanisation, qui garantit la constance de la pression du gaz dans les alvéoles.

Ainsi que cela ressort de ce qui précède, l'invention ne se limite nullement à ceux de ses modes de mise en oeuvre, de réalisation et d'application qui viennent d'être décrits de façon plus explicite.

**Revendications**

1. Procédé de fabrication de chambres moulées pour pneumatiques increvables du type constitué par une coussin torique en matériau élastomère comportant des alvéoles (19) indépendants entre eux dont chacun contient un gaz sous une pression prédéterminée, ledit procédé comprenant une étape de remplissage d'un moule (1) avec un élastomère approprié, pour préformer des éléments semi-toriques (10, 10a) comportant des cavités borgnes (11, 11a) ouvertes sur la face plane de chaque élément semi-torique, une première opération de vulcanisation, l'assemblage des deux demi-tores et une seconde opération de vulcanisation, lequel procédé est caractérisé en ce que la première opération de vulcanisation consiste à soumettre les éléments semi-toriques préformés à un traitement de vulcanisation, dans le moule de préformage, par application directe des températures de vulcanisation à la masse de l'élastomère, à l'exception de la zone superficielle plane de jonction des noyaux semitoriques, laquelle zone est en contact avec une partie non chauffée du moule, notamment avec la plaque de fermeture plane (3) du moule, une telle opération de vulcanisation ayant pour effet de stabiliser le matériau élastomère dans sa masse et de conférer à la zone superficielle plane de l'élément semi-torique un état de sous-vulcanisation, cette première opération de vulcanisation étant suivie du démoulage des éléments semi-toriques du moule de préformage (1) et d'une deuxième opération de moulage au cours de laquelle ils sont soumis à une deuxième opération de vulcanisation propre à assembler lesdites zones superficielles planes par vulcanisation complète de ces dernières, et à conférer à la chambre ses caractéristiques mécaniques optimales.

2. Procédé selon la revendication 1, caractérisé en ce que les éléments semi-toriques préformés sont soumis à une première opération de vulcanisation à une température pouvant atteindre 170°C à 200°C, pendant 5 minutes à une heure qui est appliquée à la masse de l'élastomère à l'exclusion des faces de jonction planes desdits éléments semi-toriques.

3. Procédé selon la revendications 1 ou la revendication 2, caractérisé en ce que la chaleur de la première opération de vulcanisation est répartie de façon homogène appropriée dans la masse à mouler, par le moule de préformage qui comporte à cet effet un réseau de chauffage incorporé (7, 8), à l'exclusion de la plaque de fermeture plane (3) du moule (1) qui ne comporte pas de moyens de chauffage.

4. Procédé selon l'une quelconque des revendications 1 à 3, caractérisé en ce que le raccordement des faces planes respectives sous-vulcanisées de deux éléments semi-toriques correspondants est réalisé conjointement avec une deuxième opération de vulcanisation, dans une atmosphère d'un gaz inerte sous pression, par serrage et compression des faces de soudure par chauffage progressif pouvant atteindre 200°C en fin d'opération, pendant une durée de quelques minutes à une à plusieurs heures.

5. Procédé selon l'une quelconque des revendications 1 à 3, caractérisé en ce que le raccordement des faces planes sous-vulcanisées respectives de deux éléments semi-toriques (10, 10a) correspondants est réalisé au cours d'une première étape au cours de laquelle les demi-tores préformés et ayant subi une première opération de vulcanisation, sont mis en place dans les deux coquilles en regard l'une de l'autre, d'un moule (13), en ce que ce dernier est ensuite fermé de façon étanche, puis mis en pression de gaz inerte, après quoi les deux demi-tores (10, 10a) sont comprimés mécaniquement l'un sur l'autre par fermeture complète et verrouillage dudit moule (13) en position fermée, en ce que la deuxième opération de vulcanisation est réalisée au cours d'une seconde étape au cours de laquelle ledit moule (13) verrouillé, contenant l'élément torique raccordé, est chauffé pendant quelques minutes à une à plusieurs heures à une température pouvant atteindre 170 à 200°C, à l'aide de moyens appropriés tels que plateaux chauffants, étuve, introduction de vapeur dans le moule, application d'énergie haute fréquence ou ultra-haute fréquence, pour réaliser simultanément la vulcanisation complète et l'assemblage des deux faces planes précitées l'une avec l'autre.

6. Procédé selon la revendication 4 ou la revendication 5, caractérisé en ce que le gaz inerte introduit dans le second moule est mis et maintenu sous une pression de l'ordre de 0,5 à 10 bars.

7. Appareillage pour la fabrication de chambres moulées pour pneumatiques increvables du type constitué par un coussin torique en matériau élastomère comportant des alvéoles (19) indépendants entre eux dont chacun contient un gaz sous une pression déter-

1 0 027 417 12

minée, lequel appareillage est du type comprenant un moule (1) dont la partie femelle (2) est en demi-coquille et la partie mâle (4) porte des doigts (5) de moulage de cavités dans la masse de matériau élastomère qui remplit la demi-coquille femelle, ledit appareillage étant caractérisé en ce qu'il comprend, en combinaison, un moule (1) à circuit de chauffage incorporé (8) pour le préformage et la première opération de vulcanisation d'un élément semi-torique, et un moule (13) de raccordement de deux éléments semi-toriques (10, 10a) en regard l'une de l'autre, extraits du moule (1) de préformage et de vulcanisation susdit, et de vulcanisation finale d'un élément torique (2°) ainsi raccordé, et en ce que le moule de préformage et de vulcanisation (1) comprend une partie femelle (2) en demi-coquille dont le remplissage est réalisé d'une manière connue par des canaux de transfert (6), une plaque de fermeture (3) de la face plane de la demi-coquille, une partie mâle (4) qui porte des doigts (5) de moulage de cavités dans la masse du matériau élastomère qui remplit la demi-coquille femelle (2), un réseau de chauffage incorporé (7, 8) d'une part dans la partie femelle du moule et d'autre part dans les doigts de moulage des cavités, à l'exclusion de la plaque de fermeture (3).

8. Appareillage selon la revendication 7, caractérisé en ce que le réseau de chauffage (7, 8) incorporé dans le moule de préformage et de vulcanisation est constitué par un circuit de fluide chauffé à une température pouvant atteindre 170 à 200°C, associé à un dispositif de régulation de la température.

9. Appareillage selon la revendication 7, caractérisé en ce que le réseau de chauffage (7, 8) incorporé dans le moule de préformage et de vulcanisation est constitué par un réseau de chauffage électrique par résistance.

10. Appareillage selon la revendication 7, caractérisé en ce que le moule (13) de raccordement et de vulcanisation finale comprend:

— deux parties (14, 15) dans chacune desquelles est ménagée en regard, une empreinte (16, 17) destinée à recevoir un élément semi-torique (10, 10a);

— une admission (18) de gaz sous pression, inerte à l'égard du matériau élastomère dont sont constitués les éléments semi-toriques (10, 10a);

— des moyens de fermeture étanche du moule, par serrage des deux parties (14, 15) du moule (13) de raccordement et de vulcanisation finale, et des moyens de verrouillage du moule; et

— des moyens de chauffage du moule pour assurer le raccordement des deux surfaces planes en regard des deux éléments semi-toriques contenus dans les empreintes en regard susdites des deux parties dudit moule, et la deuxième opération de vulcanisation de l'élément torique obtenu.

**Patentansprüche**

1. Verfahren zur Herstellung geformter Kammern für unverwüstliche Reifen vom Typ dargestellt durch ein torisches Kissen aus elastomerem Material, umfassend untereinander unabhängige Zellen (19) von denen jede ein Gas enthält untervorbestimmtem Druck, wobei das genannte Verfahren einen Schritt der Füllung einer Form (1) mit einem entsprechenden Elastomeren umfasst, zum Vorformen halbtorischer Elemente (10, 10a), die offene einäugige Höhlungen (11, 11a) auf der planaren Fläche jedes halbtorischen Elementes umfassen, einen ersten Vorgang der Vulkanisation, das Zusammenfügen zweier Halbtoruse und einen zweiten Vorgang der Vulkanisation, wobei dieser Vorgang dadurch gekennzeichnet ist, daß der erste Vorgang der Vulkanisation darin besteht, die vorgeformten halbtorischen Elemente einer Vulkanisationsbehandlung zu unterwerfen in der Vorformungsform, durch direkte Anwendung von Vulkanisationstemperaturen auf die elastomère Masse, mit Ausnahme der oberflächlichen Verbindungszone der halbtorischen Kerne, wobei diese Zone im Kontakt ist mit einem nicht erhitzten Teil der Form, insbesondere mit der planaren Abschlußplatte (3) der Form, wobei ein solche Vulkanisationsbehandlung den Effekt der Stabilisierung des elastomeren Materials in seiner Masse hat und der oberflächlichen planaren Zone des halbtorischen Elementes einen Zustand der Unter-Vulkanisation erlangt, wobei dieser erste Vorgang der Vulkanisation gefolgt wird von dem Herausnehmen aus der Form der halbtorischen Elemente aus der Vorformungs-Form (1), und einem zweiten Formungsvorgang im Verlauf dessen sie einem zweiten vollen Vulkanisationsvorgang unterworfen werden zum Zusammenstellen genormter oberflächlicher planarer Zonen durch vollständige Vulkanisation der letzteren, und zum Verleihen ihrer optimalen mechanischen Eigenschaften an die Kammer.

2. Verfahren gemäß Anspruch 1, dadurch gekennzeichnet, daß die vorgeformten halbtorischen Elemente einem ersten Vulkanisationsvorgang bei einer Temperatur unterworfen werden, die 170°C bis 200°C erreichen kann, während 5 Minuten bis 1 Stunde, der angewandt wird auf die Masse von Elastomeren mit Ausnahme der planaren Verbindungsflächen genannter halbtorischer Elemente.

3. Verfahren nach Anspruch 1 oder 2, dadurch gekennzeichnet, daß die Wärme des ersten Vulkanisationsvorganges aufgeteilt wird in entsprechender homogener Weise in der zu formenden Masse, durch die Vorformungs-Form, die zu diesem Zweck ein eingebautes Erhitzungsnetzwerk (7, 8) umfasst, mit Ausnahme der planaren Verschlußplatte (3) der Form (1) die nicht Mittel zum Erhitzen umfasst.

4. Verfahren gemäß einem der Ansprüche 1 bis 3, dadurch gekennzeichnet, daß die Vereini-

7

gung der entsprechenden untervulkanisierten planaren Flächen der zwei halbtorischen entsprechenden Elemente durchgeführt wird in Verbindung mit einem zweiten Vorgang der Vulkanisation, in einer Atmosphäre eines inerten Gases unter Druck, durch Einspannen und Drücken der Schweißflächen durch fortschreitendes Erhitzen, welches 200°C am Ende des Vorganges erreichen kann, während einer Dauer von einigen Minuten bis zu einer bis mehrerer Stunden.

5. Verfahren gemäß einem der Ansprüche 1 bis 3, dadurch gekennzeichnet, daß die Vereinigung der untervulkanisierten entsprechenden planaren Flächen zweier entsprechender halbtorischer Elemente durchgeführt wird im Verlauf eines ersten Schrittes in dessen Verlauf die vorgeformten und einer ersten Vulkanisationsbehandlung unterworfenen Halbtoruse in Stellung gebracht werden in den zwei Gehäusen mit Bezug von der einen zur anderen, einer Form (13), wobei diese letztere dann auf dichte Weise verschlossen wird, dann mit inertem Gas unter Druck gesetzt wird, wonach die beiden Halbtoruse (10, 10a) mechanisch zusammengedrückt werden einem auf dem anderen durch vollständiges Verschließen und Verriegeln genannter Form (13) in geschlossener Position, wobei der zweite Vorgang der Vulkanisation durchgeführt wird im Laufe eines zweiten Schrittes im Verlauf dessen die genannte verriegelte Form (13), welche das vereinigte torische Element enthält, während einiger Minuten bis zu einer bis mehrerer Stunden erhitzt wird auf eine Temperatur, die 170 bis 200°C erreichen kann, mit Hilfe entsprechender Mittel wie Heizplatten, Trockenkammer, Einführung von Dampf in die Form, Anwendung von Hochfrequenz oder Ultrahochfrequenzenergie, zur gleichzeitigen Durchführung der vollständigen Vulkanisation und Zusammenführung vorgenannter zweier planarer Flächen einer mit der anderen.

6. Verfahren gemäß Ansprüche 4 oder 5, dadurch gekennzeichnet, daß das in die zweite Form eingeführte inerte Gas gebracht und gehalten wird auf einem Druck in der Größenordnung von 0,5 bis 10 Bar.

7. Vorrichtung zur Herstellung geformter Zellen für unverwüstliche Reifen vom Typ dargestellt durch ein torisches Kissen aus elastomerem Material, das voneinander unabhängige Zellen (19) umfasst, von denen jede ein Gas unter bestimmtem Druck enthält, wobei diese Apparatur vom Typ ist, die eine Form (1) umfasst, deren weiblicher Teil (2) in einer Halbschalenform ist, und der männliche Teil (4) Finger (5) trägt, der Formung von Höhlungen in der Masse von elastomerem Material, die die weibliche Halbschalung ausfüllt, wobei die genannte Vorrichtung dadurch gekennzeichnet ist, daß sie umfasst, in Kombination, eine Form (1) mit eingebautem Erhitzungskreislauf (8) für die Vorformung und den ersten Vorgang der Vulkanisation eines halbtorischen Elementes, und eine Form (13) der Verknüpfung von zwei halbtorischen Elementen (10, 10a) mit Bezug von einem zum anderen, Extrakte der oben genannten Form (1) der Vorformung und der Vulkanisation, und der abschließenden Vulkanisation eines so zusammengefügten torischen Elementes, und wobei die Form zur Vorformung und zur Vulkanisation (1) einen weiblichen Teil (2) in Halbschale umfasst, deren Füllung in einer bekannten Weise durchgeführt wird durch Übertragungskanäle (6), eine Abschlußplatte (3) von planarer Flache der Halbschale, einen männlichen Teil (4), der Finger (5) trägt zur Formung von Höhlungen in der Masse von elastomerem Material, das die weibliche Halbschale (2) füllt, ein eingebautes Erhitzungsnetzwerk (7, 8) zu einem Teil im weiblichen Teil der Form und zum anderen Teil in den Fingern der Formung der Höhlungen mit Ausschluß der Abschlußplatte (3).

8. Vorrichtung gemäß Anspruch 7, dadurch gekennzeichnet, daß das eingebaute Erhitzungsnetz (7, 8) in der Form der Vorformung und der Vulkanisation dargestellt wird durch einen Kreislauf von Fluid, erhitz auf eine Temperatur die 170 bis 200°C erreichen kann, verbunden mit einer Vorrichtung zur Regulierung der Temperatur.

9. Vorrichtung gemäß Anspruch 7, dadurch gekennzeichnet, daß das eingebaute Erhitzungsnetzwerk (7, 8) in der Form der Vorformung und der Vulkanisation dargestellt wird durch ein durch elektrischen Widerstand wirkendes Erhitzungsnetzwerk.

10. Vorrichtung gemäß Anspruch 7, dadurch gekennzeichnet, daß die Form (13) der Verknüpfung und abschließenden Vulkanisation umfasst:

— zwei Teile (14, 15) in jedem von denen angebracht ist, jeweils eine Prägung (16, 17), bestimmt zum empfangen eines halbtorischen Elementes (10, 10a);

— eine Zuführung (18) von Gas unter Druck, inert in Hinsicht auf das elastomere Material, aus dem die halbtorischen Elemente (10, 10a) bestehen;

— Mittel zum dichten Verschluß der Form, durch Drücken der zwei Teile (14, 15) der Form (13) der Verknüpfung und der abschließenden Vulkanisation, und Mittel zur Verriegelung der Form; und

— Mittel zur Erhitzung der Form zur Sicherung der Verbindung der zwei planaren Oberflächen mit Bezug auf die beiden halbtorischen Elemente enthalten in den jeweils oben genannten Prägungen der zwei Teile der genannten Form, und den zweiten Vorgang der Vulkanisation des erhaltenen torischen Elementes.

**Claims**

1. Process for producing moulded chambers for puncture-proof tyres of the type consisting of an annular cushion made of elastomeric material and incorporating cells (19) independent of one another, each of which contains a gas under a predetermined pressure, the said process involving a stage in which a mould (1) is filled with a suitable elastomer, in order to preform semi-annular elements (10, 10a) incorporating blind cavities (11, 11a) open on the plane face of each semi-annular element, a first vulcanisation operation, the joining of the two half-annuli, and a second vulcanisation operation, the said process being characterised in that the first vulcanisation operation involves subjecting the preformed semi-annular elements to a vulcanisation treatment in the pre-forming mould as a result of the direct application of vulcanisation temperatures to the mass of the elastomer, with the exception of the plane surface zone joining the semi-annular cores, this zone being in contact with an unheated part of the mould, in particular with the plane closing plate (3) of the mould, the effect of such a vulcanisation operation being to stabilise the mass of elastomeric material and give the plane surface zone of the semi-annular element an under-vulcanised state, this first vulcanisation operation being followed by the removal of the semi-annular elements from the preforming mould (1) and by a second moulding operation, during which they undergo a second vulcanisation operation designed to join together the said plane surface zones as a result of the complete vulcanisation of the latter and to give the chamber its best possible mechanical characteristics.

2. Process according to Claim 1, characterised in that the preformed semi-annular elements undergo a first vulcanisation operation at a temperature which can reach 170°C to 200°C, for five minutes to one hour, which is applied to the mass of the elastomer excluding the plane faces for joining the said semi-annular elements.

3. Process according to Claim 1 or Claim 2, characterised in that the heat of the first vulcanisation operation is distributed in a suitable uniform manner in the mass to be moulded, via the preforming mould which incorporates for this purpose a build-in heating network (7, 8), excluding the plane closing plate (3) of the mould (1) which does not incorporate heating means.

4. Process according to any one of Claims 1 to 3, characterised in that the respective under-vulcanised plane faces of two corresponding semi-annular elements are connected to one another jointly with a second vulcanisation operation, in an atmosphere of an inert gas under pressure, as the result of the clamping and compression of the welding faces by means of progressive heating which can reach 200°C at the end of the operation, for a period of a few minutes to one to several hours.

5. Process according to any one of Claims 1 to 3, characterised in that the respective under-vulcanised plane faces of two corresponding semi-annular elements (10, 10a) are connected to one another in the course of a first stage, during which the half-annuli, which are preformed and which have undergone a first vulcanisation operation, are introduced into the two shells of a mould (13) which are located opposite one another, in that the latter is subsequently closed in a leak-proof manner and then put under inert-gas pressure, after which the two half-annuli (10, 10a) are compressed mechanically on one another as a result of the complete closure and locking of the said mould (13) in the closed position, and in that the second vulcanisation operation is carried out in the course of a second stage, during which the said locked mould (13), containing the connected annular element, is heated for a few minutes to one to several hours to a temperature which can reach 170 to 200°C, by suitable means, such as heating plates, an oven, the introduction of steam into the mould or the use of high-frequency or ultra-high frequency energy, in order to carry out simultaneously complete vulcanisation and the joining of the two above-mentioned plane faces to one another.

6. Process according to Claim 4 or Claim 5, characterised in that the inert gas introduced into the second mould is put under and maintained at a pressure of the order of 0.5 to 10 bars.

7. Apparatus for producing moulded chambers for puncture-proof tyres of the type consisting of an annular cushion made of elastomeric material and incorporating cells (19) independent of one another, each of which contains a gas under a specific pressure, this apparatus being of the type comprising a mould (1), the female part (2) of which is in the form of a half-shell and the male part (4) carries fingers (5) for moulding cavities in the mass of elastomeric material filling the female half-shell, the said apparatus being characterised in that it comprises, in combination, a mould (1) with a built-in heating circuit (8) for preforming and for the first vulcanisation operation on a semi-annular element, and a mould (13) for the connection of two semi-annular elements (10, 10a) located opposite one another and extracted from the abovementioned preforming and vulcanising mould (1), and for the final vulcanisation of an annular element (20) connected in this way, and in that the preforming and vulcanising mould (1) comprises a female part (2) in the form of a half-shell, which is filled in a known way by means of transfer channels (6), a plate (3) for closing the plane face of the half-shell, a male part (4) which carries fingers (5) for moulding cavities in the mass of elastomeric material filling the female half-shell (2), and a heating network (7, 8) built, on the one hand, into the female part of the mould and, on the other hand, into the cavity-moulding fingers, excluding the closing plate (3).

8. Apparatus according to Claim 7, characterised in that the heating network (7, 8) built into the preforming and vulcanising mould consists of a circuit of fluid heated to a temperature which can reach 170 to 200°C, associated with a temperature-regulating device.

9. Apparatus according to Claim 7, characterised in that the heating network (7, 8) built into the preforming and vulcanising mould consists of an electrical resistance heating network.

10. Apparatus according to Claim 7, characterised in that the mould (13) for connection and final vulcanisation comprises:

— two parts (14, 15), in each of which there is, one located opposite the other, an impression (16, 17) intended for receiving a semi-annular element (10, 10a);

—an intake (18) of gas under pressure, inert towards the elastomeric material of which the semi-annular elements (10, 10a) consist;

— means for the leak-proof closure of the mould as a result of the clamping of the two parts (14, 15) of the mould (13) for connection and final vulcanisation, and means for locking the mould; and

— means for heating the mould to carry out the connection of the two opposing plane surfaces of the two semi-annular elements contained in the abovementioned opposing impressions of the two parts of the said mould, and the second vulcanisation operation on the annular element obtained.

# Fig.1

# Fig. 2

## Fig. 3

## Fig. 4

## Fig. 5

2